# EUROPÄISCHE PATENTSCHRIFT

(11) **EP 0 992 788 B1**
(45) Veröffentlichungstag und Bekanntmachung des Hinweises auf die Patenterteilung: **02.05.2003**
(21) Anmeldenummer: 99250288.0
(22) Anmeldetag: 25.08.1999
(51) Int. Cl.: G01N 21/88

(54) **Einrichtung zur Einstellung und Steuerung der Beleuchtungsstärke von Kontrolleuchten**
Apparatus for the adjustment and control of the illumination level provided by the lamps of an inspection system
Dispositif de réglage et de commande du niveau d'éclairement fourni par les lampes d'un système d'inspection

(30) Priorität: 07.09.1998 DE 19842112
(43) Veröffentlichungstag der Anmeldung: 12.04.2000
(73) Patentinhaber: Braun, Uwe Peter, Dipl.-Ing., 19309 Lenzen (DE)
(72) Erfinder: Braun, Uwe Peter, Dipl.-Ing., 19309 Lenzen (DE)
(74) Vertreter: Radwer, Dieter

(56) Entgegenhaltungen:
- DE-A- 19 534 145
- GB-A- 1 207 489
- US-A- 4 918 321
- PATENT ABSTRACTS OF JAPAN vol. 010, no. 128 (C-345), 13. Mai 1986 (1986-05-13) & JP 60 251960 A (TOYOTA JIDOSHA KK), 12. Dezember 1985 (1985-12-12)
- PATENT ABSTRACTS OF JAPAN vol. 007, no. 278 (P-242), 10. Dezember 1983 (1983-12-10) & JP 58 154628 A (TOYOTA JIDOSHA KOGYO KK), 14. September 1983 (1983-09-14)

## Beschreibung

Die Erfindung betrifft eine Einrichtung zur Einstellung und Steuerung der Beleuchtungsstärke von Kontrolleuchten, vorzugsweise Lackkontrolleuchten, für die visuelle Prüfung der Oberflächenbeschaffenheit und der auf Oberflächen aufgebrachten Überzüge.

Ein maßgebliches Segment der Qualitätssicherung eines Produktes ist die Kontrolle der Oberflächenbeschaffenheit und der auf Oberflächen aufgebrachten Überzüge.

Die Prüfung farblich unterschiedlich gestalteter Oberflächen von Karosserien auf Oberflächenfehler und Lackschäden erfolgt durch visuelle Kontrollen, die beispielsweise in der Automobilindustrie in gesonderten, mit Lackkontrolleuchten ausgestatteten Arbeitsstationen durchgeführt werden - DE 195 34 145 A1, US 4 918 321, JP 581 54 628.

Die hierzu verwendeten Lackkontrolleuchten sind mit einem zweigeteilten Reflektor, einer Prismenoptik und Dunkelflächen ausgerüstet und erzeugen auf der zu prüfenden, angestrahlten Oberfläche ein Reflexbild.

Dieses Reflexbild besteht aus einem annähernd randscharfen dunklen Adaptionsstreifen, zwei zu beiden Seiten des Adaptionsstreifens liegenden Halbschattenstreifen und einem zwischen den Halbschattenstreifen befindlichen hellen Kontraststreifen erhöhter Leuchtdichte. Bei der visuellen Kontrolle bildet die mit einem Lacküberzug versehene Karosserie den Hintergrundkontrast und die hellen Kontraststreifen die Arbeitsebene - DE 195 34 145 A1, DE 196 16 884 A1, GB 1 207 489.

Durch die Transportbewegung der Karosse auf einem Förderband und/oder durch die Bewegung der Kontrollperson werden in dem Reflexbild mögliche Oberflächenund Lackfehler leicht sichtbar und können auf diese Weise ohne große Probleme erfaßt werden, wobei in dem hellen Kontraststreifen mit der erhöhten Leuchtdichte kleinste Vertiefungen in der Oberfläche noch heller erscheinen, in den Halbschattenstreifen Erhöhungen und Staubeinschlüsse und durch den Kontrastwechsel im Übergang zwischen dem Halbschattenstreifen und dem dunklen Adaptionsstreifen, Poliernebel und matte Stellen sicher erkannt werden.

Durch den Einsatz der Lackkontrolleuchten und durch das leichte visuelle Erkennen von Fehlstellen in den Oberflächen und Farbüberzügen können Produktfehler schnell erkannt und eine qualitätssichernde Nachbesserung vorgenommen werden.

In Abhängigkeit vom individuellen Farbempfinden, der Größe der Oberfläche des zu prüfenden Objektes, des Betrachtungswinkels der Prüfperson, dem Objekthintergrund und den Reflexionseigenschaften einer farbig gestalteten Oberfläche ist eine angepaßte Beleuchtungsstärke der verwendeten Kontrolleuchten erforderlich, um die in der Oberfläche und in dem aufgetragenen Überzug enthaltenen Fehler sicher zu erkennen. Bisher erfolgt die Einstellung und Steuerung der Beleuchtungsstärke der Lackkontrolleuchte manuell mit Hilfe eines Handdimmers. Allein aus Zeitgründen ist es aber nicht möglich, während des Produktionsprozesses an jeder einzelnen Prüfstation die Beleuchtungsstärke von Hand auf die farblich unterschiedlichen Oberflächenüberzüge einzustellen und die auf der Basis einer beliebigen Farbe gewählte Beleuchtungsstärke bei jedem Farbwechsel zu verändern. In der Praxis wird daher, je nach Visibilität und Sehverhalten der Kontrollperson, eine Standardvoreinstellung der Beleuchtungsstärke vorgenommen und mit dieser Beleuchtungsstärke auch bei einem Farbwechsel durchgängig gearbeitet, obwohl eine solche Standardeinstellung für die sichere Erkennung von Oberflächenfehlern und Lackschäden, insbesondere bei einem relativ häufigen Farbwechsel, völlig unzureichend ist.

Der Erfindung liegt daher die Aufgabe zugrunde, eine Einrichtung zu entwickeln, die ausgehend von der Farbgebung des Oberflächenüberzuges und den technologischen Bedingungen während des Meß- und Prüfvorganges eine selbständige Einstellung und Steuerung der Beleuchtungsstärke von Kontrolleuchten ermöglicht.

Erfindungsgemäß wird die Aufgabe durch eine Einrichtung nach den im Anspruch 1 angegebenen Merkmalen gelöst. Vorteilhafte Weiterbildungen der Erfindung ergeben sich aus den Unteransprüchen 2 bis 6.

Mit dem in der erfindungsgemäßen Einrichtung vorgesehenen Leuchtdichtesensor, der dem Empfindlichkeitsbereich des menschlichen Auges annähernd linear angepaßt ist, werden bei Änderungen der Prüfbedingungen, wie beispielsweise Änderungen der zu prüfenden Objektgröße, Änderungen des Abstandes zwischen der zu prüfenden Oberfläche und den Lackkontrolleuchten, Änderungen des Betrachtungswinkels und jede Änderung des farblichen Überzuges bei einem Farbwechsel sicher erkannt und über einen Micro-Prozessor, an dessen Eingang der Leuchtdichtesensor, ein den Steuer- und Meßvorgang auslösender Ultraschallsensor, ein Dimmer für die manuelle Einstellung der Beleuchtungsstärke und erforderlichenfalls ein Induktivgeber zur Erfassung der Tansportgeschwindigkeit eines, auf einem Förderband befindlichen Prüfobjektes und eine externe Signalspannung angeschaltet sind, die Beleuchtungsstärke der Kontrolleuchten ohne manuellen Eingriff solange automatisch heruntergeregelt, bis ein optimaler Farbkontrast für die individuelle Visibilität der prüfenden Kontrollperson erreicht ist.

Mit Hilfe der erfindungsgemäßen Einrichtung können beispielsweise in der Automobilherstellung erhebliche Kosten eingespart und durch das leichte und schnelle Erkennen von Oberflächenfehlern und Lackschäden die Produktivität um ein vielfaches gesteigert werden.

Der Leuchtdichtesensor nach der Erfindung umfaßt eine Referenzlichtquelle, die auf der Oberfläche des zu prüfenden Objektes ein rotationssymmetrisches engstrahlendes Reflexbild mit hoher Leuchtdichte erzeugt, und ein Okular mit einer Fotozelle, dessen optische Achse in den Brennpunkt des Reflexbildes fokussiert ist. Mit Hilfe der Fotozelle werden die reflektierten Referenzlichtstrahlen bzw. Lichtsignale Micro-Prozessor geleitet, durch den, unabhängig von einem Eingriff der Bedien- oder Kontrollperson, eine Einstellung und Regelung der Beleuchtungsstärke der Kontrolleuchten erfogt. Das Signal der Fotozelle dient somit direkt einer Helligkeitssteuerung, wobei eine weiße Farbe des zu prüfenden Objektes mit einer Absenkung der Beleuchtungsstärke und damit der Helligkeit verbunden ist und ein schwarzer Oberflächenüberzug zu einem Helligkeitsanstieg führt. Bei farbig gestalteten Flächen liegt die Beleuchtungsstärke zwischen den vorgenannten obersten und untersten Werten.

Das Okular der erfindungsgemäßen Einrichtung besteht aus einem Führungsrohr, das in seiner Positionierung um eine Drehachse verstellbar im Gehäusedeckel des Leuchtdichtesensors angeordnet ist. Das Führungsrohr nimmt eine Sammellinse auf, die die reflektierten Lichtstrahlen des Reflexbildes bündelt und auf die Fotozelle leitet, die in einer Fotozellenaufnahme mit einer Blende angeordnet ist. Die Fotozellenaufnahme ist innerhalb des Führungsrohres axial verstellbar und ermöglicht auf diese Weise eine leichte Justierung von Fotozelle und Sammellinse.

In einer Linsenabdeckung, mit der die Sammellinse im Führungsrohr positioniert wird, ist eine Aufnahme für einen Laserpointer vorgesehen. Mit Hilfe des Lichtpunktes des in der Aufnahme eingesetzten Laserpointers läßt sich die optische Achse des Okulars ohne großen Aufwand leicht und schnell in den Brennpunkt des Reflexbildes fokussieren. Nach erfolgter Einstellung des Okulars wird der Laserpointer wieder abgenommen. Der Leuchtdichtesensor besitzt vorteilhafterweise ein einseitig offenes Gehäuse und wird mit Hilfe eines am Gehäuse verstellbar angelenkten Befestigungsbügels in der Ebene der Kontrolleuchten angebracht. Das Gehäuse ist mit einem Deckel verschlossen, in dem die Referenzlichtquelle und das Okular angeordnet sind. Die übrigen mechanischen und elektischen Bauteile des Leuchtdichtesensors, wie beispielsweise der Transformator der Referenzlichtquelle oder die Schnittstelle, über die die Photozelle mit dem Micro-Prozessor verbunden ist, sind in dem Gehäuse angeordnet.

Die Erfindung soll nachstehend an einem Ausführungsbeispiel näher erläutert werden. In den dazugehörigen Zeichnungen zeigen:
- Fig. 1:: eine schematische Darstellung des Leuchtdichtesensors im Schnitt
- Fig. 2:: den Schnitt A-A gemäß Fig. 1

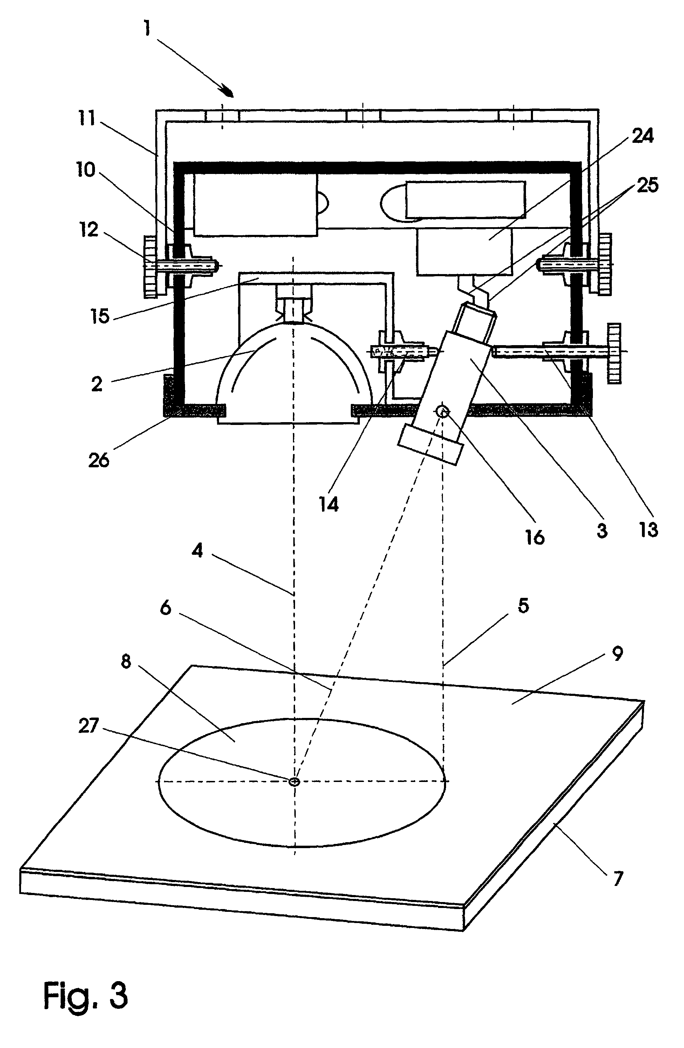

- Fig. 3:: die Anordnung und Einstellung des Leuchtdichtesensors in bezug auf die Oberfläche des zu prüfenden Objektes
- Fig. 4:: die Einzeilheit "X" aus Fig. 2 zur Aufnahme des Laserpointers
- Fig. 5:: das Prinzipschaltbild der erfindungsgemäßen Einrichtung

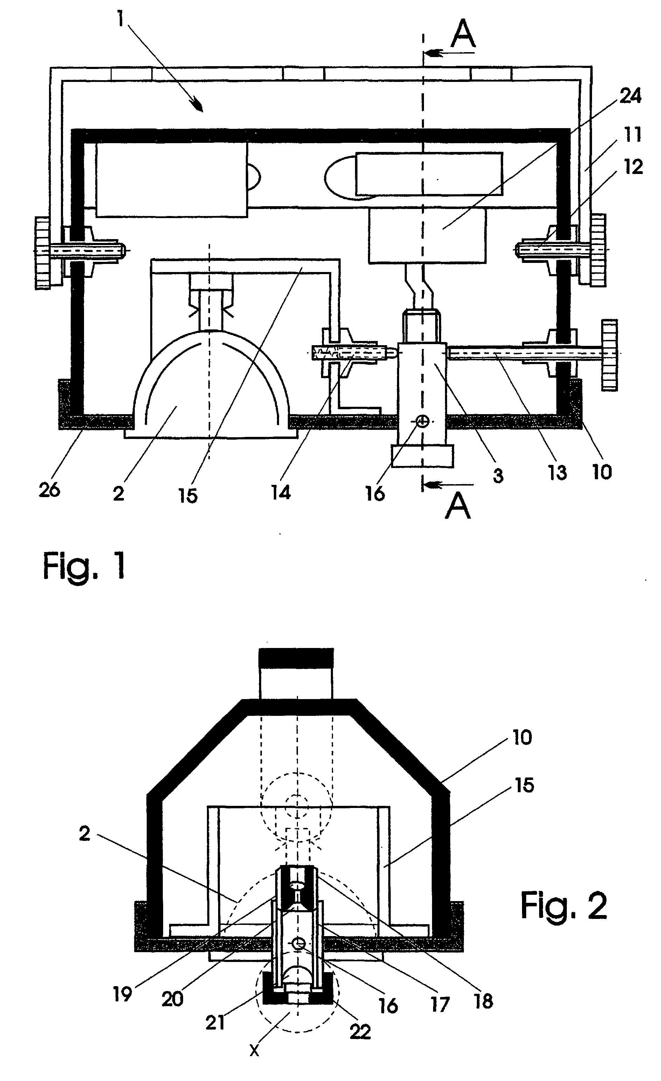

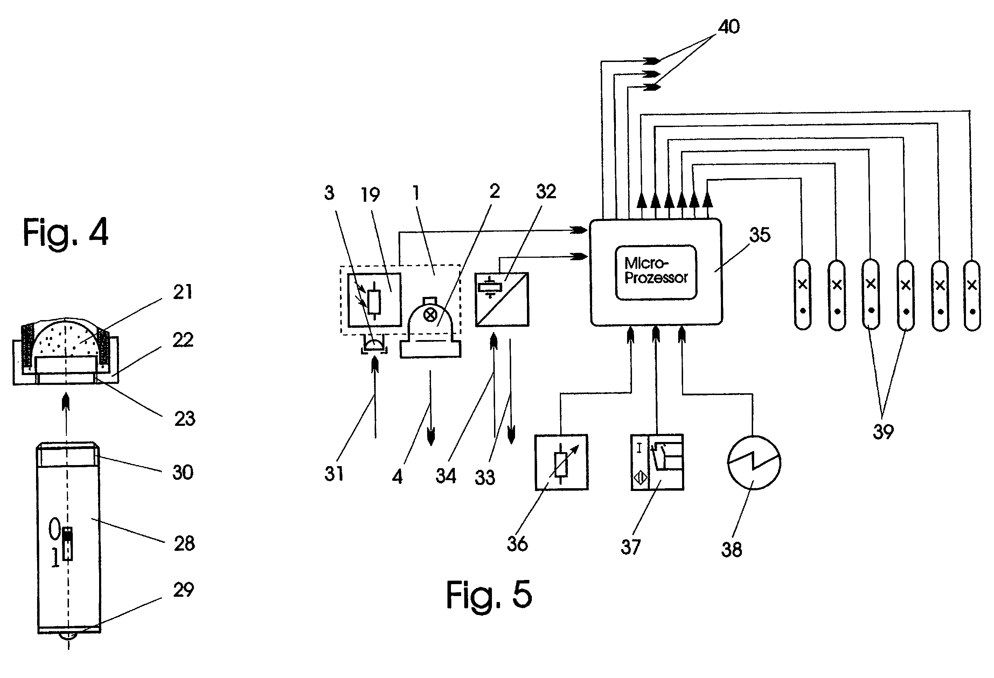

Wie aus Fig. 1 und 2 hervorgeht, besteht der Leuchtdichtesensor 1 der erfindungsgemäßen Einrichtung gemäß Fig. 5 aus einer Referenzlichtquelle 2 und einem um eine Drehachse 16 verstellbaren Okular 3, dessen Fotozelle 19 über Anschlußleitungen 25 der Schnittstelle 24 mit dem Eingang des Micro-Prozessors 35 elektrisch verbunden ist. Die Referenzlichtquelle 2 und das um die Drehachse 16 verstellbare Okular 3 sind in einem abnehmbaren Deckel 26 angeordnet, der das Gehäuse 10 verschließt. Der Lichtsensor 1 wird mit Hilfe des Befestigungsbügels 11 so in der Ebene der Kontrolleuchten angeordnet, daß die Referenzlichtstrahlen 4 annähernd senkrecht auf die Oberfläche 9 des zu prüfenden Objektes 7 auftreffen. Die Referenzlichtquelle 2 erzeugt auf der mit einem Überzug versehenen Oberfläche 9 des Objektes 7 ein rotationssymmetrisches engstrahlendes Reflexbild 8, in dessen Bennpunkt 27 die optische Achse 6 des Okulars 3 fokussiert wird. Hierzu wird das Okular 3, dessen optische Achse 5 in seiner Ausgangsposition zunächst ebenfalls annähernd senkrecht zur Oberfläche 9 des Objektes 7 liegt, mit Hilfe der Stellschraube 13 um die Drehachse 16 verstellt.

Die Lichtsignale der von der zu prüfenden Oberfläche 9 des Objektes 7 reflektierten Referenzlichtstrahlen werden durch eine Sammellinse 21 des Okulars 3 gebündelt und über eine Blende 20 auf eine Fotozelle 19 geleitet und direkt in analoge elektrische Signale umgesetzt. Über die Schnittstelle 24 werden die analogen elektrischen Signale in den nachgeschalteten Micro-Prozessor eingegeben und zur Einstellung und Regelung der Beleuchtungsstärken der Kontrolleuchten in Abhängigkeit von der Farbgebung des Überzuges und den Prüfbedingungen in der Arbeitsstation eingesetzt.

Das Okular 3 besteht aus einem Führungsrohr 17 mit der Sammellinse 21, die mit Hilfe einer Linsenabdeckung 22 in dem Führungsrohr 17 gehaltert ist und aus einer im Führungsrohr 17 durch axiale Verstellung einstellbaren Fotozellenaufnahme 18 mit der Fotozelle 19 und der Blende 20.

Die Linsenabdeckung 22 ist vorteilhafterweise mit einer Aufnahme 23 für einen Laserpointer 28 ausgestattet. Mit Hilfe des vom Laserpointer 28 erzeugten Lichtpunktes kann die optische Achse 6 des Okulars 3 auf relativ einfache Weise schnell auf den Brennpunkt 27 des Reflexbildes 8 eingestellt werden. Änderung in der Objektgröße und im Abstand der Kontrolleuchten zur Oberfläche des Prüfobjektes können auf diese Weise über den Leuchtdichtesensor 1 schnell erfaßt und die Arbeitsstation an die geänderten Prüfbedingungen leicht angepaßt werden.

Zur Verstellung und Ausrichtung der optischen Achse 6 des Okulars 3 auf den Brennpunkt 27 des Reflexbildes 8 ist neben der Stellschraube 13 ein mittels Feder vorgespanntes Druckstück 14 vorgesehen, das ebenfalls am Außenmantel des Führungsrohres 17 anliegt und in einer Halterung 15 der Referenzlichtquelle 2 positioniert ist.

Eine zusätzliche Verstellmöglichkeit und Einstellung des Leuchtdichtesensors 1 in bezug auf die Oberfläche 9 des zu prüfenden Objektes 7 ist mit Hilfe der Feststellschrauben 12 gegeben, über die der Befestigungsbügel 11 am Gehäuse 10 des Leuchtdichtesensors befestigt ist. Neben den genannten elektrischen und optischen Baugruppen dient das Gehäuse 10 des Leuchtdichtesensors 1 zur Aufnahme der mechanischen und elektrischen Bauelemente.

Kernstück der in Fig. 5 dargestellten, erfindungsgemäßen Einrichtung zur Einstellung und Regelung der Beleuchtungsstärken der Kontrolleuchten in Abhängigkeit von der farblichen Gestaltung des Oberflächenüberzuges und den technischen/technologischen Bedingungen in der Arbeits- bzw. Prüfstation ist ein Micro-Prozessor 35, an den ausgangsseitig über Anschlußleitungen 40 eine oder mehrere Kontrolleuchten 39 angeschlossen sind. Neben dem vorstehend bereits ausführlich beschriebenen Leuchtdichtesensor 1 ist an den Eingang des Micro-Prozessors 35 ein Ultraschallsensor 32, der ein in die Arbeits- und Prüfstation einlaufendes Prüfobjekt vermittels der ausgesandten und reflektierten Ultraschallsignale 33; 34 erfaßt und den Meß- und Steuerprozeß zur Einstellung und Regelung der Beleuchtungsstärken der Kontrolleuchten 39 auslöst, ein Dimmer 36, mit dem gegebenenfalls eine Einstellung der Beleuchtungsstärke von Hand vorgenommen werden kann und eine externe Signalspannung 38 angeschaltet. Um feststellen zu können, ob die Transporteinrichtung, auf der sich das Prüfobjekt befindet, steht oder sich bewegt, ist erforderlichenfalls ein Induktivgeber 37 an den Eingang des Micro-Prozessor 35 angeschlossen.

In Abhängigkeit vom Grad der über das Okular 3 erfaßten Reflektion 31 der Referenzlichtstrahlen 4 von der Oberfläche des zu prüfenden Objektes 7 verändert sich der Widerstand der Fotozelle 19, dessen Widerstandswert bei hoher Reflektion niedriger und bei geringer Reflektion höher wird. Diese Veränderungen werden im Micro-Prozessor 35 zu einem digitalen Signal verarbeitet, mit dem die elektronischen Vorschaltgeräte der Kontrolleuchten 39 direkt angesteuert und ihre Beleuchtungsstärke entsprechend verändert wird.

### Bezugszeichenaufstellung

- 1: Leuchtdichtesensor
- 2: Referenzlichtquelle
- 3: Okular
- 4: Referenzlichtstrahl
- 5: optische Achse
- 6: optische Achse
- 7: Objekt
- 8: Referenzbild
- 9: Oberflächenüberzug
- 10: Gehäuse
- 11: Befestigungsbügel
- 12: Feststellschraube
- 13: Stellschraube
- 14: Druckstück
- 15: Halterung
- 16: Drehachse
- 17: Führungsrohr
- 18: Fotozellenaufnahme
- 19: Fotozelle
- 20: Blende
- 21: Sammellinse
- 22: Linsenabdeckung
- 23: Laserpointeraufnahme
- 24: Schnittstelle zum Micro-Prozessor
- 25: Anschlußleitung
- 26: Deckel
- 27: Brennpunkt
- 28: Laserpointer
- 29: Laserdiode
- 30: Anschlußgewinde
- 31: reflektierter Referenzlichtstrahl
- 32: Ultraschallsensor
- 33: Ultraschallsignal
- 34: reflektiertes Ultraschallsignal
- 35: Micro-Prozessor
- 36: Handdimmer
- 37: Induktivgeber
- 38: externe Signalspannung
- 39: Kontrolleuchten
- 40: Anschlußleitungen

## Patentansprüche

1. Einrichtung zur Einstellung und Steuerung der Beleuchtungsstärke von Kontrolleuchten für die visuelle Prüfung von Oberflächen und von auf Oberflächen aufgetragenen Überzügen, **dadurch gekennzeichnet, daß** die Kontrolleuchten (39) durch einen Micro-Prozessor (35) angesteuert werden, an den eingangsseitig ein Leuchtdichtesensor (1), mit einer Referenzlichtquelle (2) und einem Okular (3), bestehend aus einer Blende (20) und einer Fotozelle (19) hinter einer Sammellinse (21), ein den Steuer- und Meßvorgang auslösender Ultraschallsensor (33), ein Dimmer (36) für die manuelle Einstellung der Beleuchtungsstärke und wahlweise Mittel (37) zur Erfassung der Fördergeschwindigkeit eines zu prüfenden Objektes (7) und eine externe Signalspannung (38) und ausgangsseitig über Anschlußleitungen (40) die Kontrolleuchten (39) angeschlossen sind.

2. Einrichtung nach Anspruch 1, **dadurch gekennzeichnet, daß** die Referenzlichtquelle (2) des Leuchtdichtesensor (1) auf der zu prüfenden Oberfläche (9) des Objektes (7) ein Reflexbild (8) erzeugt, in dessen Brennpunkt (27) die optische Achse (6) des Okulares (3) fokussierbar ist und die reflektierten Referenzlichtstrahlen (31) des Reflexbildes (8) nach Umsetzung in digitale Signale über eine angeschlossene Schnittstelle (24) an den Micro-Prozessor (35) geleitet werden.

3. Einrichtung nach Anspruch 1 und 2, **dadurch gekennzeichnet, daß** das Okular (3) ein Führungsrohr (17) mit der Sammellinse (21) umfaßt, in dem eine Fotozellenaufnahme (18) mit der Blende (20) justierbar angeordnet ist.

4. Einrichtung nach Anspruch 1, 2 und 3, **dadurch gekennzeichnet, daß** das Führungsrohr (17) des Okulars (3) um eine Drehachse (16) verschwenkbar angeordnet und in einer Linsenabdeckung (22) des Führungsrohres (17) eine Aufnahme (23) für einen Laserpointer (28) vorgesehen ist.

5. Einrichtung nach einem der Ansprüche 1 bis 4, **dadurch gekennzeichnet, daß** die Referenzlichtquelle (2) des Sensors (1), die ein rotationssymmetrisches, engstrahlendes Reflexbild (8) hoher Leuchtdichte erzeugt, annähernd senkrecht zur Oberfläche (9) des Objektes (7) ausgerichtet ist und durch Verschwenken des Führungsrohres (17) um die Drehachse (16) durch Betätigung einer Stellschraube (17) gegen die Stellkraft eines vorgespannten Druckstückes (14) die optische Achse (6) des Okulars (3) in den Brennpunkt (27) des Referenzbildes (8) fokussierbar ist.

6. Einrichtung nach einem der Ansprüche 1 bis 5, **dadurch gekennzeichnet, daß** die Referenzlichtquelle (2), das Okular (3), die Schnittstelle (24) des Sensors (1) von einem einseitig offenen Gehäuse (10) umschlossen sind, das mit einem Deckel (26), in dem die Referenzlichtquelle (2) und das Okular (3) angeordnet sind und der mit dem Gehäuse (10) verschraubt wird, verschlossen ist.

## Claims

1. Device for the adjustment and regulation of the light intensity of control lamps used for the visual inspection of surfaces and coatings applied to surfaces **characterized by** the triggering of the control lamps (39) by a micro-processor (35) which receives input from a light intensity sensor (1) with a referential light source (2) and an eye-piece (3) which consists of a diaphragm (20) and a photocell (19) behind a convex lens (21), an ultrasonic sensor (33) triggering the regulation and measurement procedure, a dimmer (36) for the manual adjustment of the light intensity, an optional mechanism (37) for determining the conveying speed of the object intended for inspection (7) and an external signal voltage (38). The micro-processor (35) outputs to the control lamps (39) through connecting wires (40).

2. A device in accordance with claim 1 **characterized by** a reflection (8) produced on the surface of the object intended for inspection by the reference light source (2) of the light density sensor (1). The optical axis (6) of the eye-piece (3) can be focused on the focal point (27) of this reflection (8), and the reflecting reference light rays (31) of the reflection (8) are transformed into digital signals by a connected interface (24) and then directed to the micro-processor (35).

3. A device in accordance with claims 1 and 2, **characterized by** the inclusion of a guide tube (17) holding the convex lens (21) within the eye-piece (3) and the adjustable placement of the photocell receptor (18) in the diaphragm (20) within the guide tube (17).

4. A device in accordance with claims 1, 2 and 3 **characterized by** the construction of the guide tube (17) of the eye-piece (3) around a rotational axis (16) with horizontal sweep and the provision for a laser pointer (28) receptor (23) in a lens covering (22) of the guide tube (17).

5. A device in accordance with claims 1 through 4 **characterized by** the arrangement of the reference light source (2) of the sensor (1), producing a rotationally symmetrical narrow beam reflection (8) of high light intensity, almost perpendicular to the surface (9) of the object (7) and the focusing of the optical axis (6) of the eye-piece (3) on the focal point (27) of the reference image (8) through the horizontal sweep of the guide (17) around the axis of rotation (16) caused by the activation of an adjusting screw (17) against the actuating power of a pressurized piece (14).

6. A device in accordance with claims 1 through 5 **characterized by** a casing (10) which encloses the reference light source (2), the eye-piece (3) and the interface (24) of the sensor (1) and which is open on one side and capped with a cover (26) including the reference light source (2) and the eye-piece (3) and screwed onto the casing (10).

## Revendications

1. Dispositif de réglage et de commande du niveau d'éclairement fourni par les lampes d'un système d'inspection pour la vérification à l'oeil nu de surfaces et d'enduits appliqués sur les surfaces, **caractérisé en ce que** les lampes du système d'inspection (39) sont commandées par un microprocesseur (35) auquel sont raccordés, du côté de l'entrée, un capteur de luminance (1) muni d'une source lumineuse de référence (2) et d'un oculaire (3), se composant d'un diaphragme (20) et d'une cellule photoélectrique (19) derrière une lentille convergente (21), un capteur d'ultrasons (33) déclenchant le processus de mesurage et de commande, un variateur d'intensité (36) destiné au réglage manuel du niveau d'éclairement et, au choix, des moyens (37) destinés à saisir la vitesse de transport d'un objet devant être vérifié (7) ainsi qu'une tension de signaux externe (38) et, du côté de la sortie, les lampes du système d'inspection (39) par l'intermédiaire de conduites de raccordement (40).

2. Dispositif selon la revendication 1, **caractérisé en ce que** la source lumineuse de référence (2) du capteur de luminance (1) génère, sur la surface devant être vérifiée (9) de l'objet (7), une image de reflet (8) dans le foyer (27) de laquelle l'axe optique (6) de l'oculaire (3) est susceptible d'être focalisé, et les rayons lumineux de référence réfléchis (31) de l'image de reflet (8) sont guidés vers le microprocesseur (35) par l'intermédiaire d'une jonction raccordée (24) après avoir été convertis en signaux numériques.

3. Dispositif selon les revendications 1 et 2, **caractérisé en ce que** l'oculaire (3) comprend un tube de guidage (17) muni de la lentille convergente (21) dans lequel un logement pour cellule photoélectrique (18) est disposé avec le diaphragme (20) de façon susceptible d'être ajusté.

4. Dispositif selon les revendications 1, 2 et 3, **caractérisé en ce que** le tube de guidage (17) de l'oculaire (3) est disposé de façon susceptible d'être pivoté autour d'un axe de rotation (16), et un logement (23) pour pointeur laser (28) est prévu dans un recouvrement de lentille (22) du tube de guidage (17).

5. Dispositif selon l'une des revendications 1 à 4, **caractérisé en ce que** la source lumineuse de référence (2) du capteur (1) qui génère une image de reflet (8) rotativement symétrique et à faisceau étroit présentant une luminance élevée est orientée à peu près verticalement par rapport à la surface (9) de l'objet (7), et l'axe optique (6) de l'oculaire (3) est susceptible d'être focalisé dans le foyer (27) de l'image de référence (8) grâce au pivotement du tube de guidage (17) autour de l'axe de rotation (16) en actionnant une vis de serrage (17) par rapport à la force de serrage d'un membre de pression (14) subissant une prétension.

6. Dispositif selon l'une des revendications 1 à 5, **caractérisé en ce que** la source lumineuse de référence (2), l'oculaire (3), la jonction (24) du capteur (1) sont entourés par un boîtier (10) ouvert d'un côté qui est fermé hermétiquement par un couvercle (26) dans lequel sont disposés la source lumineuse de référence (2) et l'oculaire (3) et qui est vissé avec le boîtier (10).
